# EUROPÄISCHE PATENTSCHRIFT

(11) **EP 1 117 570 B1**
(45) Veröffentlichungstag und Bekanntmachung des Hinweises auf die Patenterteilung: **08.01.2003**
(21) Anmeldenummer: 99942738.8
(22) Anmeldetag: 01.07.1999
(51) Int. Cl.: B60R 21/32

(54) **SCHALTUNGSANORDNUNG, BESTEHEND AUS EINEM ZÜNDELEMENT FÜR EINEN GURTSTRAFFER UND EINEM GURTBETRIEBSSENSOR**
CIRCUIT CONFIGURATION CONSISTING OF A DEPLOYMENT ELEMENT FOR A BELT-TENSIONER AND A BELT OPERATION SENSOR
CIRCUIT COMPRENANT UN ELEMENT D'AMORCAGE POUR UN PRETENSIONNEUR DE CEINTURE ET UN DETECTEUR DE FONCTIONNEMENT DE LA CEINTURE

(30) Priorität: 07.10.1998 DE 19846113
(43) Veröffentlichungstag der Anmeldung: 25.07.2001
(60) Teilanmeldung: 01128889.1
(73) Patentinhaber: ROBERT BOSCH GMBH, 70442 Stuttgart (DE)
(72) Erfinder: MATTES, Bernhard, D-74343 Sachsenheim (DE)
(86) Internationale Anmeldenummer: DE9901920
(87) Internationale Veröffentlichungsnummer: WO00020261

(56) Entgegenhaltungen:
- DE-A- 19 505 334
- US-A- 5 742 986
- US-A- 5 879 024

## Beschreibung

### Stand der Technik

Die vorliegende Erfindung betrifft eine Schaltungsanordnung, bestehend aus einem Zündelement für einen Gurtstraffer und einem Gurtbetriebssensor, welche über ein gemeinsames Leitungspaar mit einer das Zündelement diagnostizierenden und den Gurtbetriebssensor auswertenden Steuereinheit verbindbar sind.

Eine solche Schaltungsanordnung ist aus der DE 195 05 334 A1 bekannt. Diese bekannte Schaltungsanordnung besitzt ein die Betriebslage des Sicherheitsgurtes kennzeichnendes Schaltelement. Damit soll auf elektronischem Wege eine Erkennung der Betriebslagen des Sicherheitsgurtes ermöglicht werden. Es soll also erkennbar sein, ob der Gurt ordnungsgemäß in das Gurtschloß eingesteckt ist oder nicht, wenn sich eine Person auf dem Sitz des Fahrzeugs befindet. Gegebenenfalls soll dann bei nicht ordnungsgemäß gestecktem Sicherheitsgurt ein Warnsignal abgegeben werden. Gemäß dieser Druckschrift sind sowohl der Gurtbetriebssensor als auch das Zündelement für den Gurtstraffer über ein gemeinsames symmetrisches Leitungspaar an eine Steuereinrichtung geschaltet. Dadurch, daß nicht der Gurtbetriebssensor und das Zündelement über eigene Leitungen an die Steuereinheit angeschaltet sind, verringert sich das Risiko, daß über viele Leitungen auch viele Störsignale eingekoppelt werden können. Außerdem wird dadurch die Kabelbaum-Komplexität und die Anzahl der benötigten Steckerkontakte verringert. Nach der DE 195 05 334 A1 sind das Zündelement für den Gurtstraffer und ein Gurtschloßschalter, der als Gurtbetriebssensor dient, parallel an ein gemeinsames Leitungspaar angeschaltet. Zudem ist dem Gurtschloßschalter noch ein Widerstand in Reihe und ein weiterer Widerstand parallel geschaltet.

Der Erfindung liegt die Aufgabe zugrunde, eine Schaltungsanordnung der eingangs genannten Art anzugeben, mit der der Gurtbetrieb eindeutig ermittelt und der Zustand des Zündelements zuverlässig diagnostiziert werden kann.

### Vorteile der Erfindung

Die genannte Aufgabe wird mit den Merkmalen des Anspruchs 1 gelöst.

Gemäß Anspruch 1 sind das Zündelement, der Gurtbetriebssensor und ein erster hochohmiger Widerstand parallel geschaltet, die Parallelschaltung ist mit einem zweiten niederohmigen Widerstand in Reihe geschaltet und die Reihenschaltung aus dem zweiten Widerstand und der Parallelschaltung ist an die beiden Leitungen angeschlossen. Der Gurtbetriebssensor ist vorzugsweise ein mechanisch betätigbarer Schalter in einem Gurtschloß, der geöffnet wird, wenn eine Gurtzunge in das Gurtschloß eingerastet wird, und der ansonsten geschlossen ist. Es handelt sich hierbei um eine sehr wenig aufwendige Schaltungsanordnung, die lediglich zwei ohmsche Widerstände zusätzlich zum Zündelement und zum Gurtschloßschalter aufweist.

### Beschreibung von Ausführungsbeispielen

Anhand zweier in der Zeichnung dargestellter Ausführungsbeispiele wird nachfolgend die Erfindung näher erläutert. Es zeigen:

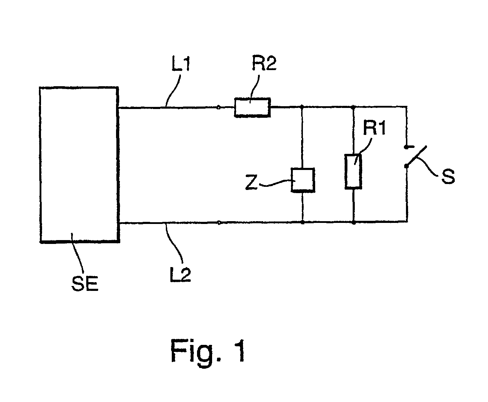

Figur 1 ein erstes Ausführungsbeispiel

Die in der Figur 1 dargestellte Schaltungsanordnung weist ein Zündelement Z für einen Gurtstraffer und einen diesem parallel geschalteten, als Gurtbetriebssensor dienenden Schalter S auf. Es handelt sich hierbei um einen mechanischen Schalter, der im Gurtschloß integriert ist und der seine Schaltstellung ändert, wenn eine Gurtzunge in das Gurtschloß eingerastet wird. Wenn die Gurtzunge in das Gurtschloß eingerastet ist, ist der Schalter S geöffnet und bei nicht eingerasteter Gurtzunge ist der Schalter S geschlossen.

Zu dem Zündelement Z und dem Schalter S ist ein erster hochohmiger Widerstand R1 (z.B. 10kΩ) parallel geschaltet. In Reihe zu der Parallelschaltung aus dem Zündelement Z dem hochohmigen Widerstand R1 und dem Schalter S ist ein zweiter niederohmiger Widerstand R2 (z.B. 1,5Ω) in Reihe geschaltet. Diese genannte Reihenschaltung ist über ein Leitungspaar, bestehend aus den Leitungen L1 und L2, an eine Steuereinheit SE angeschlossen. Die Steuereinheit SE soll im Falle eines Fahrzeügcrashes das Zündelement Z mit einem Zündstrom versorgen, so daß der Gurtstraffer aktiviert wird. Außerdem ist aus Sicherheitsgründen eine Überprüfung der Funktionsfähigkeit des Zündelements von der Steuereinheit SE durchzuführen. Diese Funktionsprüfung besteht üblicherweise in einer Widerstandsmessung des Zündelements Z. Ebenso soll die Steuereinheit SE den Gurtbetrieb sensieren können, das heißt erfassen, ob der Schalter S geschlossen (Gurt nicht eingerastet) oder geöffnet (Gurt eingerastet) ist.

Mit den oben angegebenen Werten für den niederohmigen Widerstand R2 (1,5Ω) und den hochohmigen Widerstand R1 (10kΩ) und den Widerstand des Zündelements Z von ca. 2Ω mißt die Steuereinheit SE bei geschlossenem Schalter S nur den Widerstand R2 = 1,5Ω. Ist der Schalter S geöffnet, so mißt die Steuereinheit SE einen Gesamtwiderstand, der in etwa der Summe aus dem niederohmigen Widerstand R2 und dem Widerstand des Zündelements Z (1,5Ω + 2Ω = 3,5Ω) entspricht. Damit kann die Steuereinheit deutlich zwischen den beiden Schaltzuständen des Schalters S unterscheiden.

Bei geschlossenem Schalter S kann die Steuereinheit SE aufgrund des in Reihe geschalteten niederohmigen Widerstandes R2 diagnostizieren, ob in dem Zündkreis ein Kurzschluß (gemessener Widerstand < 1,5Ω) oder eine Unterbrechung (gemessener Widerstand > 10kΩ) vorliegt. Bei geöffnetem Schalter S kann der korrekte Widerstand des Zündelements Z ermittelt werden. Der gemessene Widerstand entspricht der Summe aus dem niederohmigen Widerstand R2 und dem Widerstand des Zündelements Z (1,5Ω + 2Ω = 3,5Ω) aus dem gemessenen Widerstand 3,5Ω läßt sich nun der Widerstand 2Ω des Zündelements Z berechnen. Nur bei geöffnetem Schalter, also nur bei eingerastetem Gurt, kann der Widerstand des Zündelements Z diagnostiziert und auch gezündet werden. Erfolgt eine Zündung, so wird die Steuereinheit SE anschließend einen Widerstand R2 + R1 von ungefähr 10kΩ messen. Damit erhält die Steuereinheit einen eindeutigen Hinweis darauf, daß der Gurtstraffer ausgelöst worden ist.

## Patentansprüche

1. Schaltungsanordnung, bestehend aus einem Zündelement (Z) für einen Gurtstraffer und einem Gurtbetriebssensor (S), welche über ein gemeinsames Leitungspaar mit einer das Zündelement (Z) diagnostizierenden und den Gurtbetriebssensor (S) auswertenden Steuereinheit (SE) verbindbar sind, **dadurch gekennzeichnet, daß** das Zündelement (Z), der Gurtbetriebssensor (S) und ein erster hochohmiger Widerstand (R1) parallel geschaltet sind, daß diese Parallelschaltung mit einem zweiten niederohmigen Widerstand (R2) in Reihe geschaltet ist und daß die Reihenschaltung aus dem zweiten Widerstand (R2) und der Parallelschaltung (Z, R1 an die beiden Leitungen (L1, L2) angeschlossen ist.

2. Schaltungsanordnung nach Anspruch 1, **dadurch gekennzeichnet, daß** der Gurtbetriebssensor ein im Gurtschloß angeordneter Schalter (S) ist, der geöffnet ist, wenn eine Gurtzunge im Gurtschloß eingerastet ist, und ansonsten geschlossen ist.

## Claims

1. Circuit arrangement, comprised of a firing element (Z) for a seatbelt pretensioner and a seatbelt operating sensor (S), which can be connected via a common line pair to a control unit (SE) which diagnoses the firing element (Z) and evaluates the seatbelt operating sensor (S), **characterized in that** the firing element (Z), the seatbelt operating sensor (S) and a first high-impedance resistor (R1) are connected in parallel with one another, **in that** this parallel connection is connected in series with a second low-impedance resistor (R2), and **in that** the series connection composed of the second resistor (R2) and the parallel connection (Z, R1) is connected to the two lines (L1, L2).

2. Circuit arrangement according to Claim 1, **characterized in that** the seatbelt operating sensor is a switch (S) which is arranged in the seatbelt lock and which opens when a belt tongue is engaged in the belt lock, and is otherwise closed.

## Revendications

1. Circuit comprenant un élément d'amorçage (Z) pour un prétensionneur de ccinture et un détecteur de fonctionnement de la ceinture (S), qu'on peut relier au moyen d'une paire commune de conducteurs à une unité de commande (SE) qui diagnostique l'élément d'amorçage (Z) et évalue le détecteur de fonctionnement de la ceinture (S),
**caractérisé en ce que**
l'élément d'amorçage (Z), le détecteur de fonctionnement de la ceinture (S) et une première résistance de valeur ohmique élevée (R1) sont montés en parallèle, que ce circuit en parallèle est monté en série avec une deuxième résistance de valeur ohmique faible (R2) et que le circuit en série composé de la deuxième résistance (R2) et du circuit en parallèle (Z, R1) est relié aux deux conducteurs (L1, L2).

2. Circuit selon la revendication 1,
**caractérisé en ce que**
le détecteur de fonctionnement de la ceinture est un commutateur (S) placé dans le verrouillage de ceinture qui est ouvert lorsqu'une lame de ceinture est encliquetée dans le verrouillage de ceinture et est fermé dans les autres cas.
